# EUROPEAN PATENT APPLICATION

(11) **EP 2 744 238 A1**
(43) Date of publication of application: **18.06.2014**
(21) Application number: 12823530.6
(22) Date of filing: 10.08.2012
(51) Int. Cl.: H04W 4/06, H04W 16/32

(54) **MOBILE COMMUNICATION METHOD, MOBILE TERMINAL, AND PROCESSOR**

(30) Priority: 12.08.2011 US 201161523172 P
(71) Applicant: Kyocera Corporation, Kyoto-shi Kyoto 612-8501 (JP)
(72) Inventor: CHANG, Henry, San Diego, California 92123 (US); FUKUTA, Noriyoshi, Kyoto-shi Kyoto 612-8501 (JP)
(74) Representative: Schwabe - Sandmair - Marx
(86) International application number: PCT/JP2012/070440
(87) International publication number: WO 2013/024802

(57) **Abstract**

A mobile communication method is a method for distributing MBMS data to a mobile terminal in a mobile communication system including a general cell supporting a broadcasting of the MBMS data and a specific cell not supporting the broadcasting of the MBMS data. The mobile communication method comprises a step of controlling not to set a frequency used in the specific cell to a highest priority of cell selection, at the mobile terminal, when the mobile terminal receives the MBMS data broadcasted from the general cell in an idle state and a frequency used in the general cell is different from the frequency used in the specific cell.

## Description

### TECHNICAL FIELD

The present invention relates to a mobile communciaiton method, a mobile termnial, and a processor used in a mobile communication system including a general cell supporting a broadcasting of MBMS data and a specific cell not supporting the broadcasting of the MBMS data.

### BACKGROUND ART

There has been known a general cell (e.g., macrocell) supporting broadcasting of MBMS data. There has also been known a specific cell referred to as a CSG (Closed Subscriber Group) cell, a homecell, a femtocell, or the like.

Note that an access type is settable in the specific cell. The access type is "Closed," "Hybrid," or "Open".

The specific cell does not support the broadcasting of the MBMS data. Thus, when a mobile terminal performs handover from a general cell to a specific cell or changes the selected cell from a general cell to a specific cell, the mobile terminal cannot continuously receive the MBMS data.

### SUMMARY OF THE INVENTION

A mobile communication method according to the present invention is a method for distributing MBMS data to a mobile terminal in a mobile communication system including a general cell supporting a broadcasting of the MBMS data and a specific cell not supporting the broadcasting of the MBMS data. The method is characterized by comprising a step of controlling not to set a frequency used in the specific cell to a highest priority of cell selection, at the mobile terminal, when the mobile terminal receives the MBMS data broadcasted from the general cell in an idle state and a frequency used in the general cell is different from the frequency used in the specific cell.

The mobile terminal may control to set the frequency used in the general cell to the highest priority of cell selection, in the step.

A mobile terminal according to the present invention receives MBMS data in a mobile communication system including a general cell supporting a broadcasting of the MBMS data and a specific cell not supporting the broadcasting of the MBMS data. The mobile terminal is characterized by comprising: a control unit that controls not to set a frequency used in the specific cell to a highest priority of cell selection, when the mobile terminal receives the MBMS data broadcasted from the general cell in an idle state and a frequency used in the general cell is different from the frequency used in the specific cell.

A processor according to the present invention is included in a mobile terminal that receives MBMS data in a mobile communication system including a general cell supporting a broadcasting of the MBMS data and a specific cell not supporting the broadcasting of the MBMS data. The processor is characterized by controlling not to set a frequency used in the specific cell to a highest priority of cell selection, when the mobile terminal receives the MBMS data broadcasted from the general cell in an idle state and a frequency used in the general cell is different from the frequency used in the specific cell.

A mobile communication method according to a first feature is a method distributing MBMS data to a mobile terminal in a mobile communication system including a general cell supporting a broadcasting of the MBMS data and a specific cell not supporting the broadcasting of the MBMS data. The mobile communication method comprises a step A of maintaining a priority of the specific cell without increasing the priority, which is used as a priority of cell selection, at the mobile terminal, when the mobile terminal receives the MBMS data broadcasted from the general cell in an idle state and a frequency used in the general cell is different from a frequency used in the specific cell.

In the first feature, the mobile communication method comprises a step B of increasing the priority of the specific cell, which is used as the priority of cell selection, at the mobile terminal, when the mobile terminal receives the MBMS data broadcasted from the general cell in an idle state and the frequency used in the general cell is same as the frequency used in the specific cell.

In the first feature, the mobile communication method comprises a step C of broadcasting priorities of frequencies in respective cells, as the priority of cell selection, from the general cell. In the step A, the mobile terminal applies the priority of the frequency used in the specific cell, as the priority of cell selection for the specific cell.

In the first feature, the mobile communication method comprises a step C of broadcasting priorities of frequencies in respective cells, as the priority of cell selection, from the general cell. In the step B, the mobile terminal increases the priority of the specific cell more than the priority of the frequency used in the specific cell.

In the first feature, the mobile communication method comprises a step D of broadcasting an offset of a priority of the frequency used in the specific cell from the general cell. In the step A, the mobile terminal sets the priority of cell selection for the specific cell, based on the offset of the priority of the frequency used in the specific cell.

A mobile terminal according to a second feature is configured to receive MBMS data in a mobile communication system including a general cell supporting a broadcasting of the MBMS data and a specific cell not supporting the broadcasting of the MBMS data. The mobile terminal comprises a control unit that controls not to set a frequency used in the specific cell to a highest priority of cell selection, when the mobile terminal receives the MBMS data broadcasted from the general cell in an idle state and a frequency used in the general cell is different from a frequency used in the specific cell.

A processor according to a third feature is included in a mobile terminal that receives MBMS data in a mobile communication system including a general cell supporting a broadcasting of the MBMS data and a specific cell not supporting the broadcasting of the MBMS data. The processor executes a process not to set a frequency used in the specific cell to a highest priority of cell selection, when the mobile terminal receives the MBMS data broadcasted from the general cell in an idle state and a frequency used in the general cell is different from a frequency used in the specific cell.

### BRIEF DESCRIPTION OF THE DRAWINGS

Fig. 1 is a diagram showing a mobile communication system 100 according to a embodiment.
Fig. 2 is a diagram showing a radio frame according to the embodiment.
Fig. 3 is a diagram showing a radio resource according to the embodiment.
Fig. 4 is a block diagram showing a UE 10 according to the embodiment.
Fig. 5 is a sequence diagram showing a mobile communication method according to the embodiment.
Fig. 6 is a diagram for describing a mobile communication method according to the embodiment.
Fig. 7 is a diagram for describing a mobile communication method according to the embodiment.

### DESCRIPTION OF THE EMBODIMENTS

A mobile communication system according to an embodiment of the present invention is described below by referring to the drawings. In the following description of the drawings, same or similar reference numerals are given to denote same or similar portions.

Note that the drawings are merely schematically shown and proportions of sizes and the like are different from actual ones. Thus, specific sizes and the like should be judged by referring to the description below. In addition, there are of course included portions where relationships or percentages of sizes of the drawings are different with respect to one another.

### [Summary of Embodiments]

A mobile communication method according to an embodiment is a method for distributing MBMS data to a mobile terminal in a mobile communication system including a general cell supporting a broadcasting of the MBMS data and a specific cell not supporting the broadcasting of the MBMS data. The mobile communication method includes a step A of controlling not to set a frequency used in the specific cell to a highest priority of cell selection, at the mobile terminal, when the mobile terminal receives the MBMS data broadcasted from the general cell in an idle state and a frequency used in the general cell is different from a frequency used in the specific cell. For example, the mobile terminal maintains a priority of the frequency used in the specific cell without increasing the priority, which is used as a priority of cell selection.

In the embodiment, when the frequency used in the general cell is different from the frequency used in the specific cell, the priority of the specific cell, which is used as a priority of cell selection, is not increased but maintained. Specifically, if the frequency of the specific cell is Inter-Frequency, the specific cell is treated in the same way as the general cell.

Thus, the changing of selected cell from the general cell to the specific cell is inhibited when interference is less likely to be received from the specific cell, and the MBMS data can be continuously received from the general cell.

Note that specific cells in embodiments are preferably cells installed in small and large scales. It is preferable that the specific cells be cells including an HNB (Home Node B), a HeNB (Home Evolved Node B), a femto BTS, and the like. Thus, the base station that manages the specific cell is the HNB, the HeNB, the femto BTS, or the like.

### [First Embodiment]

### (Mobile Communication System)

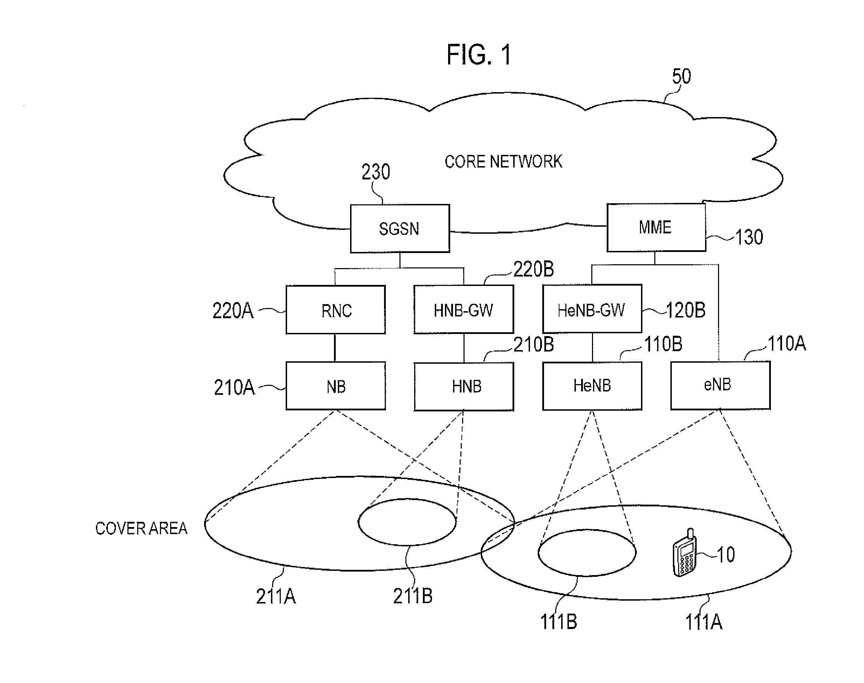

A mobile communication system according to a first embodiment is described below. Fig. 1 is a diagram showing a mobile communication system 100 according to the first embodiment.

As shown in Fig. 1, the mobile communication system 100 includes a radio terminal 10 (hereinafter, UE 10) and a core network 50. In addition, the mobile communication system 100 includes a first communication system and a second communication system.

For example, the first communication system is a communication system supporting LTE (Long Term Evolution). The first communication system has, for example, a base station 110A (hereinafter, eNB 110A), a home base station 110B (hereinafter, HeNB 110B), a home base station gateway 120B (hereinafter, HeNB-GW 120B), and an MME 130.

Note that a radio access network (E-UTRAN; Evolved Universal Terrestrial Radio Access Network) supporting the first communication system includes the eNB 110A, HeNB 110B, and HeNB-GW 120B.

For example, the second communication system is a communication system supporting UMTS (Universal Mobile Telecommunication System). The second communication system has a base station 210A (hereinafter, NB 210A), a home base station 210B (hereinafter, HNB 210B), an RNC 220A, a home base station gateway 220B (hereinafter, HNB-GW 220B), and an SGSN 230.

Note that a radio access network (UTRAN; Universal Terrestrial Radio Access Network) supporting the second communication system includes the NB 210A, HNB 210B, RNC 220A, and HNB-GW 220B

The UE 10 is a device (User Equipment) configured to communicate with the second communication system or the first communication system. For example, the UE 10 has a function to perform radio communications with the eNB 110A and the HeNB 110B. Or, the UE 10 has a function to perform radio communications with the NB 210A and the HNB 210B.

The eNB 110A is a device (evolved NodeB) managing a general cell 111A and configured to perform radio communications with the UE 10 present in the general cell 111A.

The HeNB 110B is a device (Home evolved NodeB) managing a specific cell 111B and configured to perform radio communications with the UE 10 present in the specific cell 111B.

The HeNB-GW 120B is a device (Home evolved NodeB Gateway) connected with the HeNB 110B and configured to manage the HeNB 110B.

The MME 130 is a device (Mobility Management Entity) connected with the eNB 110A and configured to manage mobility of the UE 10 establishing the radio connection with the HeNB 110B. Also, the MME 130 is a device connected with the HeNB 110B via the HeNB-GW 120B and configured to manage the mobility of the UE 10 establishing the radio connection with the HeNB 110B.

The NB 210A is a device (NodeB) managing a general cell 211A and configured to perform radio communications with the UE 10 present in the general cell 211A.

The HNB 210B is a device (Home NodeB) managing a specific cell 211B and configured to perform radio communications with the UE 10 present in the specific cell 211B.

The RNC 220A is a device (Radio Network Controller) connected with the NB 210A and configured to establish a radio connection (RRC Connection) with the UE 10 present in the general cell 211A.

The HNB-GW 220B is a device (Home NodeB Gateway) connected with the HNB 210B and configured to establish a radio connection (RRC Connection) with the UE 10 present in the specific cell 211B.

The SGSN 230 is a device (Serving GPRS Support Node) configured to exchange packets in a packet exchange domain. The SGSN 230 is provided in the core network 50. Although omitted in Fig. 1, a device (MSC; Mobile Switching Center) to perform line switching in a line switching domain may be provided in the core network 50.

Note that the general cell and the specific cell should be understood as functions to perform radio communications with the UE 10. However, the general cell and the specific cell are also used as terms to express service areas of cells. Also, a cell such as the general cell or the specific cell is identified by a frequency, diffusion code, time slot, or the like which is used in a cell.

The specific cell is sometimes referred to as a femtocell, a CSG (Closed Subscriber Group), a homecell, or the like. Also, the specific cell is configured to be settable with an access type for defining UEs 10 allowed to access the specific cell. The access type is "Closed," "Hybrid," or "Open".

The "Closed" specific cell is configured to permit only a specific user (UE; User Equipment) managed by the specific cell to receive provision of services.

The "Hybrid" specific cell is configured to permit a specific user managed by the specific cell to perform communications with a high quality and is configured to permit a non-specific user not managed by the specific cell to perform communications with a best effort quality.

The "Open" specific cell is configured to permit all the UEs 10 to receive provision of services, as is the case with the public cell. Here, in the "Open" cell, UEs 10 can perform communications with equal quality without being distinguished as to whether the UEs 10 are managed by the specific cell.

Note that the access type may be an "ACCESS CLASS BARRED" to prohibit an access of the UE 10 by each access class, or a "CELL BARRED" to prohibit an access of the UE 10 by each cell.

Hereinbelow, the first communication system will be mainly described. It is to be noted that the following description may be applied to the second communication system.

In the first communication system, an OFDMA (Orthogonal Frequency Division Multiple Access) scheme is used as a downlink multiplexing scheme, and a SC-FDMA (Single-Carrier Frequency Division Multiple Access) is used as an uplink multiplexing scheme.

The first communication system has an uplink control channel (PUCCH; Physical Uplink Control Channel), an uplink shared channel (PUSCH; Physical Uplink Shared Channel), and the like as an uplink channel. In addition, the first communication system has a downlink control channel (PDCCH; Physical Downlink Control Channel), a downlink shared channel (PDSCH; Physical Downlink Shared Channel), and the like as a downlink channel.

The uplink control channel is a channel that carries a control signal. The control signal is, for example, CQI (Channel Quality Indicator), PMI (Precoding Matrix Indicator), RI (Rank Indicator), SR (Scheduling Request), ACK/NACK, or the like.

The CQI is a signal for notifying a recommended modulation scheme and coding speed to be used in the downlink transmission. The PMI is a signal indicating a precoder matrix preferably used for the downlink transmission. RI is a signal indicating the number of layers (streams) to be used for the downlink transmission. SR is a signal requesting an allocation of an uplink radio resource (resource block to be described later). ACK/NACK is a signal indicating whether the signal transmitted through the downlink channel (e.g., PDSCH) is received.

The uplink shared channel is a channel for carrying a control signal (including the control signal described above) and/or a data signal. For example, the uplink radio resource may be allocated only to the data signal, or may be allocated in such a manner that the data signal and the control signal are multiplexed.

The downlink control channel is a channel for carrying the control signal. For example, the control signal is Uplink SI (Scheduling Information), Downlink SI (Scheduling Information), or TPC bit.

The Uplink SI is a signal indicating an allocation of the uplink radio resource. The Downlink SI is a signal indicating an allocation of the downlink radio resource. The TCP bit is a signal instructing increment/decrement of power for a signal transmitted through the uplink channel.

The downlink shared channel is a channel that carries the control signal and/or the data signal. For example, the downlink radio resource can be allocated only to the data signal, or may be allocated in such a manner that the data signal and the control signal are multiplexed.

The control signal to be transmitted through the downlink shared channel includes TA (Timing Advance). The TA is transmission timing correcting information between the UE 10 and the eNB 110A, and is measured by the eNB 110A on the basis of the uplink signal transmitted from the UE 10.

A control signal to be transmitted through a channel other than the downlink control channel (PDCCH) and the downlink shared channel (PDSCH) includes ACK/NACK. The ACK/NACK is a signal indicating whether the signal transmitted through an uplink channel (e.g., PUSCH) is received.

In the first embodiment, the general cell is a cell supporting a broadcasting of MBMS data. The general cell broadcasts MBMS service information indicating a content of the MBMS data (program listing). Alternatively, the general cell broadcasts MBMS service change information notifying that the MBMS service information is to be changed and indicating the timing at which the MBMS service information is changed. For example, the general cell transmits the MBMS data through an MTCH (Multicast Traffic Channel). The general cell transmits the MBMS information indicating the content of the MBMS data (program listing) through an MCCH (Multicast Traffic Channel). Alternatively, the general cell transmits the MBMS information through the MTCH.

In contrast, the specific cell is a cell not supporting the broadcasting of the MBMS data. Thus, it is to be noted that the specific cell has not function of broadcasting the MBMS data, and generally does not broadcast the MBMS service information and the MBMS service change information. Still, the specific cell can transmit the MBMD data to the UE 10 connected to the specific cell and thus is in the connected state. For example the specific cell can transmit the MBMS data by using the PDSCH.

The general cell and the specific cell broadcast the broadcast information through a broadcast channel (BCCH; Broadcast Control Channel). The broadcast information is information such as MIB (Master Information Block), SIB (System Information Block), and the like, for example.

### (Radio Frame)

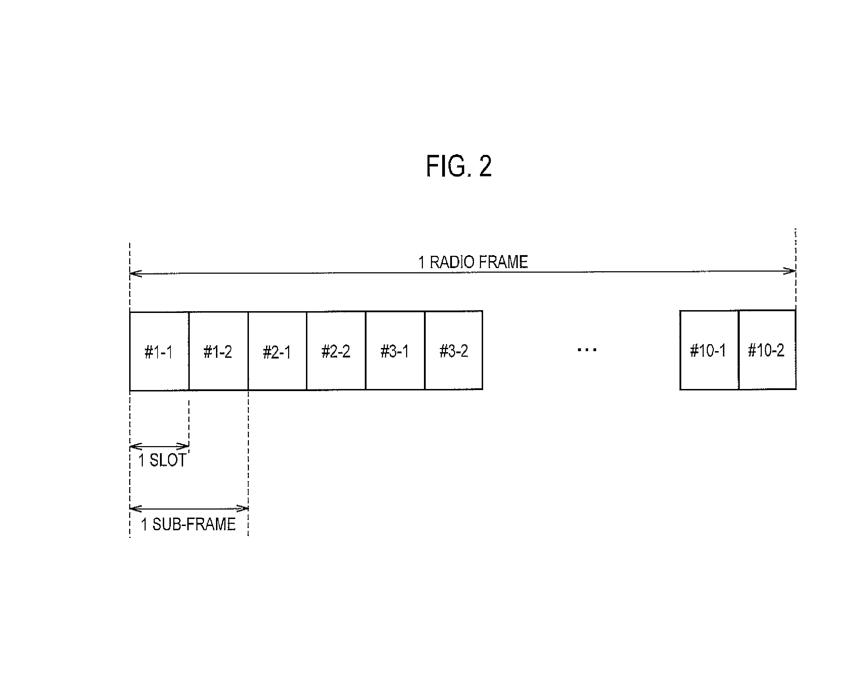

A radio frame in the first communication system is described below. Fig. 2 is a diagram showing the radio frame in the first communication system.

As shown in Fig. 2, a single radio frame includes 10 sub-frames. A single sub-frame includes two slots. A time length of a single slot is 0.5 msec. A time length of a single sub-frame is 1 msec. A time length of a single radio frame is 10 msec.

A single slot includes a plurality of OFDM symbols (e. g., six or seven OFDM symbols) in the downlink direction. Similarly, a single slot includes a plurality of SC-FDMA symbols (e.g., six or seven SC-FDMA symbols).

### (Radio Resource)

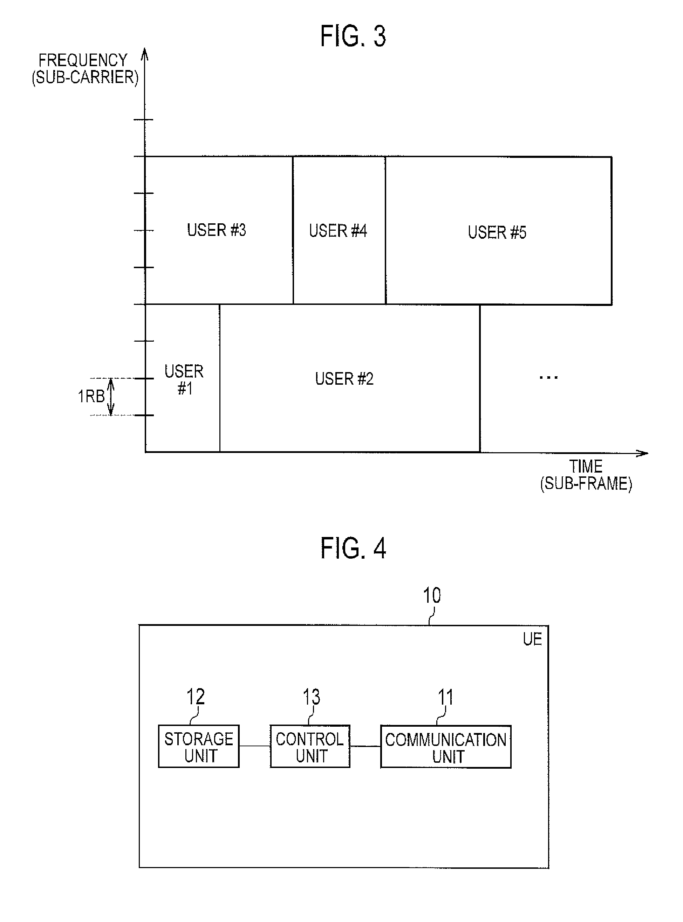

A radio resource in the first communication system is described below. Fig. 3 is a diagram showing the radio resource in the first communication system.

As shown in Fig. 3, the radio resource is defined by the frequency axis and the time axis. The frequency includes a plurality of sub-carriers. A batch of predetermined number of sub-carriers (12 sub-carriers) is referred to as a resource block (RB: Resource Block). As described above, time has units such as OFDM symbol (or SC-FDMA symbol), slot, sub-frame, radio frame, and the like.

The radio resource can be allocated in the unit of resource block. The radio resource can be divided on the frequency axis and the time axis to be allocated to a plurality of users (e.g., user #1 to user #5).

The eNB 110A allocates the radio resource. The eNB 110A is allocated to the UEs 10 on the basis of CQI, PMI, RI, and the like.

### (Mobile Terminal)

A mobile terminal according to the first embodiment of the present invention is described below. Fig. 4 is a block diagram showing the UE 10 according to the first embodiment.

In the following description, a case is mainly described where cell selection (Cell Reselection) from a general cell to a specific cell is performed, when the UE 10 receives the MBMS data broadcasted from the genera cell in the idle state

It is to be noted that the UE 10 that receives the MBSM data includes not only the UE 10 that is actually receiving the MBSM data but also the UE 10 that is attempting to receive the MBMS data. The UE 10 attempting to receive the MBMS data is the UE 10 that has notified the network side of its interest in the content of the MBMS data.

As shown in Fig. 4, the UE 10 includes a communication unit 11, a storage unit 12, and a control unit 13.

The communication unit 11 performs radio communications with the radio base station (eNB 110A or NB 210A) managing the general cell. The communication unit 11 performs radio communications with the radio base station (HeNB 110B or HNB 210B) managing the specific cell.

The storage unit 12 stores therein various kinds of information for controlling the UE 10. For example, the storage unit 12 stores therein a program for operating the UE 10. The storage unit 12 stores therein the list of specific cells that the UE 10 can connect to, that is, the list (CSG white list) of specific cells that can provide service to the UE 10.

The control unit 13 controls the operation of the UE 10. For example, the control unit 13 controls the selection (Cell Reselection) of a camping cell by the UE 10.

Generally, the control unit 13 ranks the cells on the basis of the results of comparison between the quality (Q_{meas,s}) of the current cell and the qualities (Q_{meas,n}) of the neighboring cells. The control unit 13 selects the cell at the highest ranking as the camping cell. It is a matter of course that the neighboring cell is a cell neighboring the current cell. More specifically, the control unit 13 adds the hysteresis (Q_{Hyst}) to the quality (Q_{meas,s}) of the current cell to calculate the ranking (Rₛ) of the current cell. Moreover, the control unit 13 subtracts the offset (Qoffset) from the quality (Q_{meas,s}) of the neighboring cell to calculate the ranking (Rₙ) of the current cell.

Alternatively, on the basis of the priority (cellReselectionPriority) of the frequency used in the cell, the control unit 13 selects the cell having the highest priority as the camping cell. Alternatively, on the basis of the result of the ranking and the priority, the control unit 13 selects the cell having the highest priority as the camping cell. It is to be noted that the ranking indicates the priority in the selection for the camping cell and thus can be regarded as a type of the priority.

The hysteresis (Q_{Hyst}), the offset (Qoffset), and the priority (cellReselectionPriority) are information broadcasted from the radio base station (eNB 110A or the NM 210A) managing the general cell.

In a case where the cell included in the list of the specific cells that the UE 10 can connect to is included in the neighboring cells (specific cells), the control unit 13 sets the priority of the specific cell to be the highest. Specifically, the control unit 13 selects the specific cell as the camping cell when a cell included in the list of specific cell that the UE 10 can connect to is included in the neighboring cells (specific cells). For example, the priority of the specific cell may be set to be the highest when the frequency used in the specific cell is different from the frequency used in the general cell. The priority of the specific cell may be set to be the highest when the frequency used in the specific cell is the same as the frequency used in the general cell.

The general cell selection is as described above. In the first embodiment, the control unit 13 controls the cell selection as follows in a specific condition.

Firstly, the control unit 13 does not increase but maintains a priority of the specific cell, which is used as a priority of cell selection, when the mobile terminal receives the MBMS data broadcasted from the general cell in an idle state and a frequency used in the general cell is different from a frequency used in the specific cell. Specifically, while the priority of the specific cell is set to be the highest in the general case, in the first embodiment, the specific cell is treated in the same way as the general cell when the frequency of the specific cell is Inter-Frequency.

For example, the control unit 13 applies a priority (CellReseletctionPriority) of the frequency used in the specific cell to the priority of the cell selection for the specific cell, as in the case of the general cell. Alternatively, the UE 10 sets the priority of the cell selection for the specific cell on the basis of the offset (Qoffset) of the frequency used in the specific cell.

Secondly, the control unit 13 increases the priority of the specific cell, which is used as a priority of cell selection, when the mobile terminal receives the MBMS data broadcasted from the general cell in an idle state and a frequency used in the general cell is the same as the frequency used in the specific cell. In other words, the control unit 13 increases the priority of the specific cell, which is used as the priority of the cell selection, more than the priority of the frequency used in the specific cell. Specifically, the priority of the specific cell is set to be the highest as in the general case when the frequency of the specific cell is Intra-Frequency.

### (Mobile Communication Method)

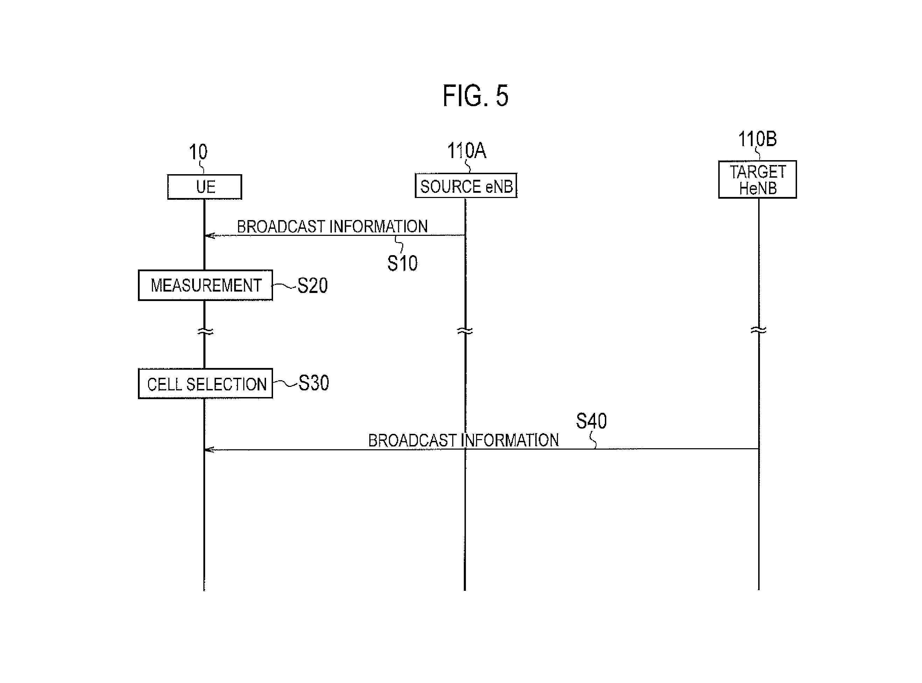

A mobile communication method according to the first embodiment is described below. Fig. 5 is a sequence diagram showing the mobile communication method according to the first embodiment.

A case is mainly described below where a selected cell is changed (Cell Reselection) from a general cell to a specific cell, when the UE 10 receives the MBMS data broadcasted from the general cell in an idle state

As shown in Fig. 5, in Step 10, the UE 10 receives broadcast information from the eNB 110A that manages the general cell. The broadcast information includes, for example, hysteresis (Q_{Hyst}), offset (Qoffset), and priority (cellReselectionPriority). The broadcast information includes a list of neighboring cells in the neighborhood of a current cell (general cell).

In Step 20, the UE 10 measures the quality of the current cell and the qualities of the neighboring cells.

In Step 30, the UE 10 performs cell selection. As described above, the UE 10 generally ranks the cells in accordance with the results of comparison between the quality (Q_{meas,s}) of the current cell and the qualities (Q_{meas,n}) of the neighboring cells. The UE 10 selects the cell at the highest rank as a camping cell. Alternatively, the UE 10 selects the cell having the highest priority as the camping cell, on the basis of the priorities (cellReselectionPriority) of the frequencies used in the cells.

Meanwhile, when a cell included in a list of specific cells that the UE 10 can connect to is included in the neighboring cells (specific cells), the UE 10 sets the priority of the specific cell to be the highest.

The general cell selection is as described above. In the first embodiment, the UE 10 controls the cell selection as follows in a specific condition.

Firstly, the UE 10 does not increase but maintains a priority of the specific cell, which is used as a priority of cell selection, when the mobile terminal receives the MBMS data broadcasted from the general cell in an idle state and a frequency used in the general cell is different from a frequency used in the specific cell. Specifically, while the priority of the specific cell is set to be the highest in the general case, in the first embodiment, the specific cell is treated in the same way as the general cell when the frequency of the specific cell is Inter-Frequency.

For example, the UE 10 applies a priority (CellReseletctionPriority) of the frequency used in the specific cell to the priority of the cell selection for the specific cell, as in the case of the general cell. Alternatively, the UE 10 sets the priority of the cell selection for the specific cell on the basis of the offset (Qoffset) of the frequency used in the specific cell.

Secondly, the UE 10 increases the priority of the specific cell, which is used as a priority of cell selection, when the mobile terminal receives the MBMS data broadcasted from the general cell in an idle state and a frequency used in the general cell is the same as the frequency used in the specific cell. In other words, the UE 10 increases the priority of the specific cell, which is used as the priority of the cell selection, to a higher priority than the priority of the frequency used in the specific cell. Specifically, the priority of the specific cell is set to be the highest as in the general case when the frequency of the specific cell is Intra-Frequency.

Here, the description continues while assuming that the specific cell is changed to the specific cell.

In Step 40, the UE 10 receives the broadcast information from the HeNB 110B managing the specific cell. The broadcast information includes MIB, SIB, and the like for example.

### (Advantageous Effects)

In the first embodiment, when the frequency used in the general cell is different from the frequency used in the specific cell, the priority of the specific cell, which is used as a priority of cell selection, is not increased but maintained. Specifically, if the frequency of the specific cell is Inter-Frequency, the specific cell is treated in the same way as the general cell.

Thus, the changing of the selected cell from the general cell to the specific cell is inhibited when interference is less likely to be received from the specific cell and the MBMS data can be continuously received from the general cell.

In the first embodiment, when the frequency used in the general cell is the same as the frequency used in the specific cell, the priority of the specific cell, which is used as a priority of the cell selection, is increased. Specifically, when the frequency of the specific cell is Intra-Frequency, the priority of the specific cell is set to be the highest as in the general case.

Thus, the changing of the selected cell from the general cell to the specific cell is induced when interference is not likely to be received from the specific cell, and the interference received by the UE 10 can be reduced.

### [Other Embodiments]

The present invention has been described by using the above-described embodiment. However, it should not be understood that the description and the drawings, which constitute one part of this disclosure, are to limit the present invention. Various alternative embodiments, examples, and operational techniques will be obvious for those who are in the art from this disclosure.

Although not particularly mentioned in the embodiment, the UE 10 may transition to the connected state in a specific cell and receive the MBMS data via unicast from the specific cell, after changing the selected cell from a general cell to the specific cell. For example, the MBMS data is received by using a PDSCH.

Note that the provision of the service continuity for MBMS services is studied in 3GPP Rel-11. In particular, UEs selection/reselection procedure in idle mode (idle state) may need enhancements to enable the UE to continue to receive MBMS services (i.e. continue to receive MBMS data). The idle mode procedures as the UE moves between MBMS capable cells and non-MBMS capable cells are described below.

In some scenarios MBMS services are provisioned on some MBSFN areas are shown but not in all areas. Currently the UE has no knowledge of whether the target cell supports MBMS services prior to cell-reselection. If the UE is near the boundary edge between an MBSFN area and non-MBSFN area and if the UE has reselected a cell in the non-MBSFN area, MBMS service continuity may be impacted as the services is not provided on the reselected cell. If the UE remains in the current cell within the MBSFN area MBMS service may be continued uninterrupted.

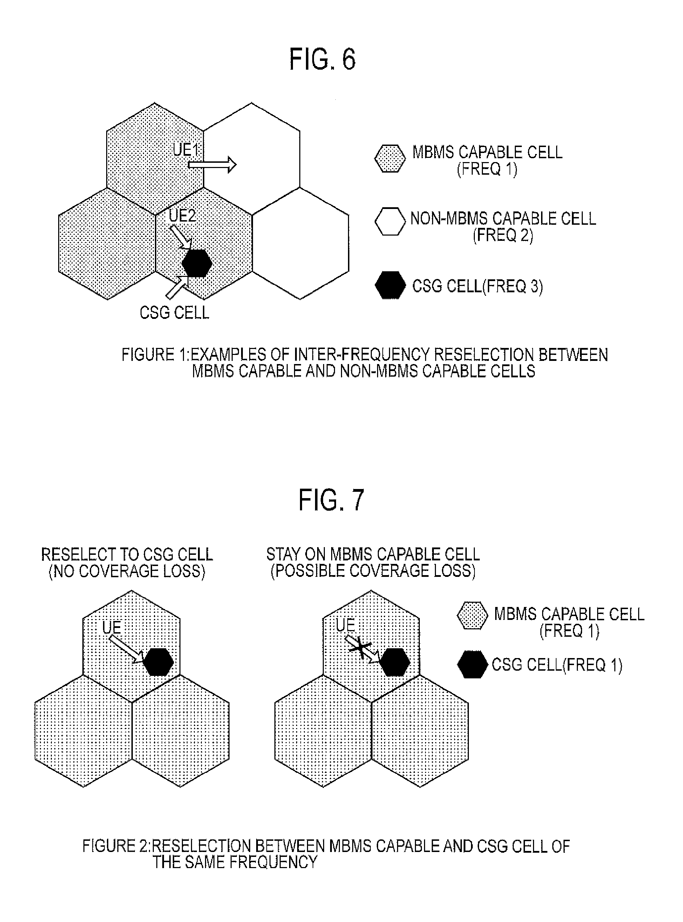

As shown in FIG. 6, if UE1 reselects to a non-MBMS capable cell (macro cell), UE1 will no longer have MBMS service via PTM. Since CSG cell is a special case of non-MBMS capable cell UE2 will also have no MBMS service via PTM if the CSG cell is reselected. And according to the current reselection rule, if a member-UE detects a suitable CSG cell, it shall reselect to this CSG cell irrespective of the frequency priority of the cell it is currently camped on.

In order to optimize the UE for MBMS service continuity the cell reselection procedure needs to be revised to make the current MBMS carrier as the highest priority frequency. If the UE is actively receiving MBMS service over PTM, the UE should make the MBMS frequency as the highest priority frequency for re-selection.

Such reselection procedure is useful for reselection between cells (MBMS capable cell and non-MBMS capable cell) belonging to different frequencies. However, as shown in FIG. 7, it is also necessary to consider whether similar changes should be applied for the intra-frequency case, specifically for the case of reselection into a CSG cell of the same frequency. If the reselection rule were changed to allow the MBMS capable cell to have the highest priority, the UE could potentially loose coverage of the MBMS capable cell due to the interference from the target CSG cell. Therefore, it would be reasonable to assume that the CSG cell of the same frequency will be the highest priority cell to the UE. In order for the UE to continue to receive MBMS services Unicast connection may be used in the CSG cell.

Therefore, for intra-frequency reselection, the current reselection procedure should be applicable and the UE may continue to receive MBMS services via Unicast connection.

As mentioned earlier, a member-UE camped on a non-MBMS capable cell can continue the MBMS service via Unicast. However, since the non-MBMS capable cell is does not support MBMS it will not have MBMS service information or MBMS change notification available to the UE. In our view MBMS service continuity implies that all MBMS related information should be readily available to the UE, and this includes MBMS change notification.

Therefore, for UEs camped on non-MBMS capable cell, the UE should be informed of MBMS service or change notification information.

This application claims the benefit of priority from U. S. Provisional Application No. 61/523172 (filed on August 12, 2011), the entire contents of which are incorporated herein by reference.

### INDUSTRIAL APPLICABILITY

As described, the present invention enables the mobile terminal to continuously receive MBMS data, and therefore is useful in mobile communications.

## Claims

1. A mobile communication method for distributing MBMS data to a mobile terminal in a mobile communication system including a general cell supporting a broadcasting of the MBMS data and a specific cell not supporting the broadcasting of the MBMS data, comprising:
a step of controlling not to set a frequency used in the specific cell to a highest priority of cell selection, at the mobile terminal, when the mobile terminal receives the MBMS data broadcasted from the general cell in an idle state and a frequency used in the general cell is different from the frequency used in the specific cell.

2. The mobile communication method according to claim 1, wherein the mobile terminal controls to set the frequency used in the general cell to the highest priority of cell selection, in the step.

3. A mobile terminal that receives MBMS data in a mobile communication system including a general cell supporting a broadcasting of the MBMS data and a specific cell not supporting the broadcasting of the MBMS data, comprising:
a control unit that controls not to set a frequency used in the specific cell to a highest priority of cell selection, when the mobile terminal receives the MBMS data broadcasted from the general cell in an idle state and a frequency used in the general cell is different from the frequency used in the specific cell.

4. A processor included in a mobile terminal that receives MBMS data in a mobile communication system including a general cell supporting a broadcasting of the MBMS data and a specific cell not supporting the broadcasting of the MBMS data, wherein
the processor controls not to set a frequency used in the specific cell to a highest priority of cell selection, when the mobile terminal receives the MBMS data broadcasted from the general cell in an idle state and a frequency used in the general cell is different from the frequency used in the specific cell.
